# EUROPEAN PATENT APPLICATION

(11) **EP 2 281 717 A2**
(43) Date of publication of application: **09.02.2011**
(21) Application number: 10170723.0
(22) Date of filing: 24.07.2010
(51) Int. Cl.: B60P 7/08

(54) **Tightening cord provided with connecting means**

(30) Priority: 24.07.2009 NL 2003284
(71) Applicant: Iac B.V., 3771 HW Barneveld (NL); Eureka PD&E BvbA, 2440 Geel (BE)
(72) Inventor: Boonstra, Dirk, 3771 HW, Barneveld (NL); van Lieshout, Steven, 2440, Geel (BE)
(74) Representative: Verhees, Godefridus Josephus Maria

(57) **Abstract**

A tightening cord 1 comprises an elastic cord 3 with a fastening element 5 fixedly connected to an end of the cord. The tightening cord 1 further includes a flexible strip 9 which is connected at one end 11 to the fastening element.

Near the free end 13 the strip 9 is provided with a plurality of sawtooth-shaped protrusions 15 extending in longitudinal direction of the strip and provided in line on the strip. The fastening element is provided with an eye 17 through which the strip 9 can be inserted, as well as a locking pin 19 which is connected to the eye and which catches on one of the protrusions when the strip is inserted through the eye.

The locking pin 19 is positioned at a first end of a flexible arm 21 whose other, second end is connected to the eye. The flexible arm 21 is provided with a release lip 23 for releasing the strip.

## Description

### Field of the invention.

The invention relates to a tightening cord comprising connecting means for connection to an object, which tightening cord comprises a cord as well as a fastening element attached to the cord, which connecting means comprise a flexible strip having at a first end coupling means for cooperation with further coupling means located on the fastening element, and the flexible strip being connected with the other, second end to the fastening element. The cord may or may not be an elastic cord.

### State of the art.

A tightening cord of this type is known from EP-A-0 043 883. The coupling means and further coupling means for this known tightening cord are formed by two hooks that can be hooked together.

### Summary of the invention.

It is an object of the invention to improve the known tightening cord. To this end the tightening cord according to the invention is characterised in that the coupling means comprise a plurality of sawtooth-shaped protrusions extending in longitudinal direction of the strip and provided in line on the strip, and the further coupling means comprise an eye attached to the fastening element through which eye the flexible strip can be inserted, as well as a locking pin which is connected to the eye and which catches on one of the protrusions of the flexible strip that has been inserted through the eye. By pulling at the flexible strip, the cord can be tensioned, if ever this cord is an elastic cord, so that the load is secured.

An embodiment of the tightening cord according to the invention is characterised in that the flexible strip is detachably connected with its second end to the fastening element. As a result, the strip and the fastening element can be made of various materials while for each component the most advantageous material may be selected. For the fastening element this is a hard, wear-proof material and for the strip this is a flexible material. The locking pin of the fastening element can thus resist considerable forces and will not easily be subject to wear, so that this embodiment is suitable for high loads and a large number of fastening cycles. In addition, strips of various lengths can be used in this embodiment, depending on the size of the object the tightening cord is to be fastened to.

A strong connection between the strip and the fastening element can be obtained by providing the fastening element with a groove open at one end and closed at the other and having an essentially omega-shaped cross section, and providing the flexible strip at the second end with a protrusion having an essentially omega-shaped cross section also which is slid into the groove.

A further embodiment of the tightening cord according to the invention is characterised in that the flexible strip is fastened with its second end to the fastening element and forms a whole with the fastening element. The strip and the fastening element can be manufactured in a more cost-effective way by producing them as an integral component. The fact is that they are to be made of a flexible material as a result of which the retaining force of the strip in the fastening element is relatively low and the protrusions on the strip and the locking pin of the fastening element are subject to more wear during repeated fastening and releasing operations. As a result, this embodiment is solely suitable for relatively low loads and a limited number of fastenings and releases.

The locking pin is preferably positioned at a first end of a flexible arm which is connected to the eye with the other, second end. As a result, the locking pin pushes against the strip under spring force of the flexible arm and then firmly catches on one of the protrusions.

Yet a further embodiment of the tightening cord according to the invention is characterised in that a release lip is fixed to the first end of the flexible arm which lip runs parallel to the arm and at a distance thereto, extending to beyond the second end. By pressing the free end of the release lip, the pin will be pressed away from the strip, so that it is released. As a result of this construction the locking effect can be terminated in a simple manner and there is no need for a lip to be pushed up, but it will suffice to merely press the end of the release lip.

Again a further embodiment of the tightening cord according to the invention is characterised in that the tightening cord further includes a coupling element which is connected to the cord, which coupling element is provided with a further protrusion of an in essence omega-shaped cross section which protrusion can be slid into the groove present in the fastening element. The advantage of this is that the end of the (elastic) cord can now be wrapped around anything (any profile) and then be fastened to the coupling element. At places where the strip turns out to be too short, the fastening element can be attached to the coupling element.

The coupling element preferably comprises a sleeve which is slid over the cord and is tightly fit around the cord. The further protrusion preferably extends in parallel with the cord.

### Brief description of the drawings.

The invention will be described in more detail based on examples of embodiment of the tightening cord according to the invention while reference is made to the appended drawing figures, in which:
Fig. 1 shows in a perspective view a first embodiment of the tightening cord, in which the strip and the fastening element form an integral component;
Fig. 2 shows a side view of the tightening cord shown in Fig. 1;
Fig. 3 shows a rear view of the tightening cord shown in Fig. 1;
Fig. 4 shows a perspective view sideways from the front of the fastening element of a second embodiment of the tightening cord;
Fig. 5 shows a perspective view sideways from the rear of the fastening element shown in Fig. 4;
Fig. 6 shows a perspective view of the second embodiment of the tightening cord;
Fig. 7 shows a longitudinal section of the fastening element shown in Fig. 4;
Fig. 8 shows a cross sectional view of the fastening element shown in Fig. 4;
Fig. 9 shows longitudinal section of the fastening element with coupled to it the strip of the second embodiment;
Fig. 10 shows a cross sectional view of the fastening element with coupled to it the strip of the second embodiment;
Fig. 11 shows a perspective view of a third embodiment of the tightening cord with the tightening cord being provided with a coupling element;
Fig. 12 shows a side view of the coupling element; and
Fig. 13 shows a front view of the coupling element.

### Detailed description of the drawings.

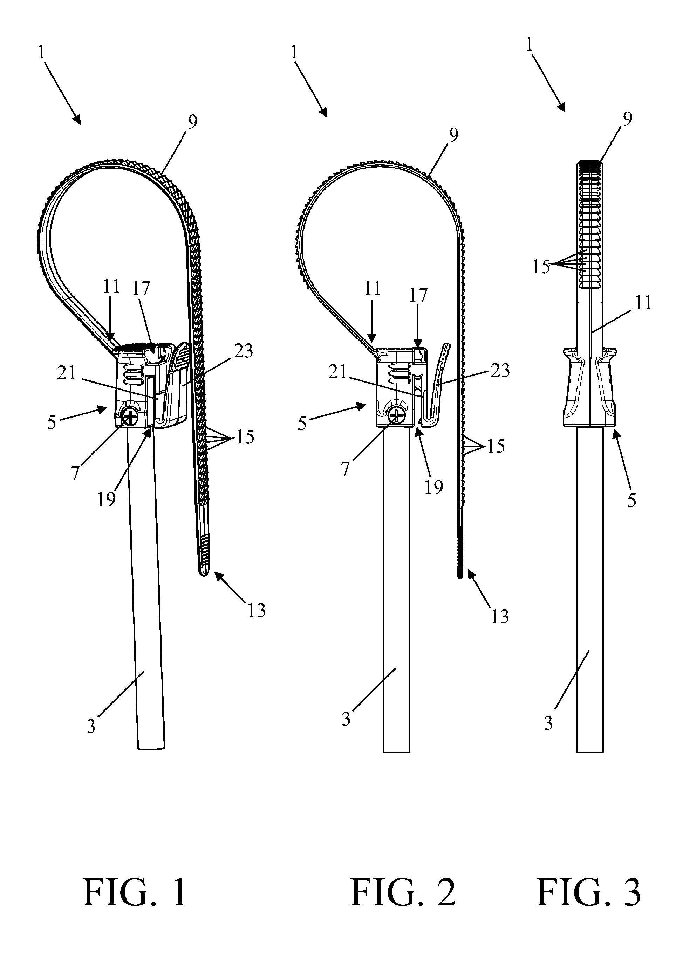

Figs. 1, 2 and 3 show in a perspective view, side view and rear view respectively a first embodiment of the tightening cord. The tightening cord 1 comprises an elastic cord 3 with a fastening element 5 fixed to an end of the cord which fastening element is fixed to the cord by means of a screw 7. The tightening cord 1 further includes connecting means for connection to an object. These connecting means are formed by a flexible strip 9 which is fixed with an end 11 to the fastening element and which forms an integral part together with the fastening element 5.

At the free end 13 the flexible strip 9 is provided with coupling means which are formed by a plurality of sawtooth-shaped protrusions 15 on the strip extending in longitudinal direction of the strip and provided in line on the strip. These coupling means cooperate with further coupling means which are present on the fastening element and are formed by an eye 17 fixed to the fastening element through which eye the flexible strip 9 can be inserted, as well as a locking pin 19 which is connected to the eye and which catches on one of the protrusions of the flexible strip inserted through the eye.

The locking pin 19 is positioned at a first end of a flexible arm 21 which is fixed to the eye with the other, second end. At the first end the flexible arm 21 is provided with a release lip 23 which runs from this end in the same direction as and at a distance parallel to the arm and which extends to beyond the second end.

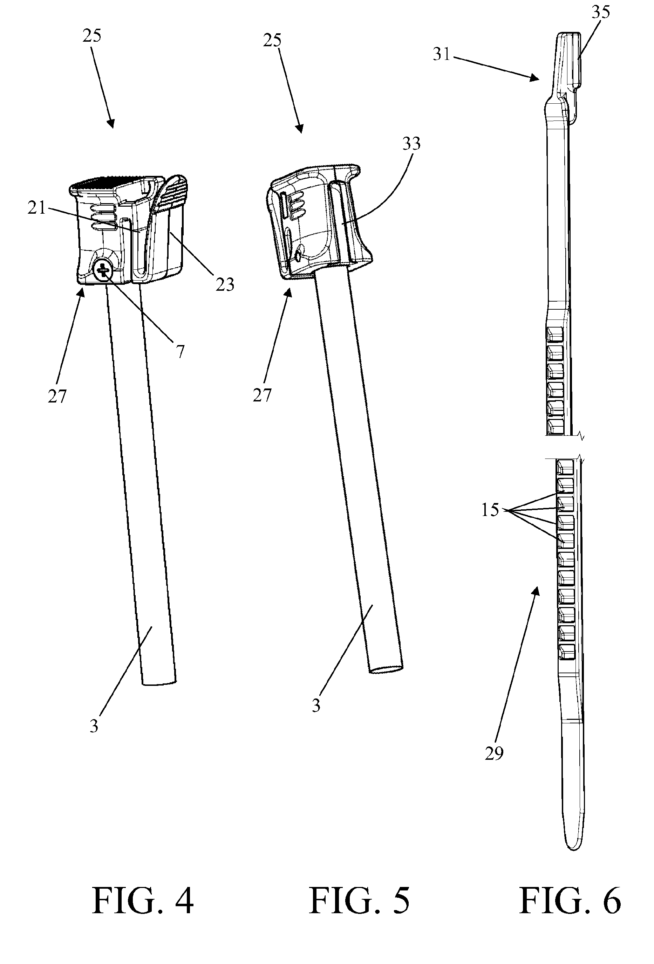

Figs. 4 and 5 show a perspective view sideways from the front and sideways from the rear respectively of a cord with fixed thereto the fastening element 27 and a second embodiment of the tightening cord 25. All component parts that are equal to those of the first embodiment described above are referred to by like reference numerals. With this tightening cord 25 the flexible strip 29, cf. Fig. 6, is detachably connected with the end 31 to the fastening element 27. This fastening element is thereto provided with an open groove at one end and a closed groove 33 at the other end of an in essence omega-shaped cross section, and for this purpose at the second end 31 the flexible strip 29 is provided with a protrusion 35 likewise having an in essence omega-shaped cross section which can be slid into the groove 33.

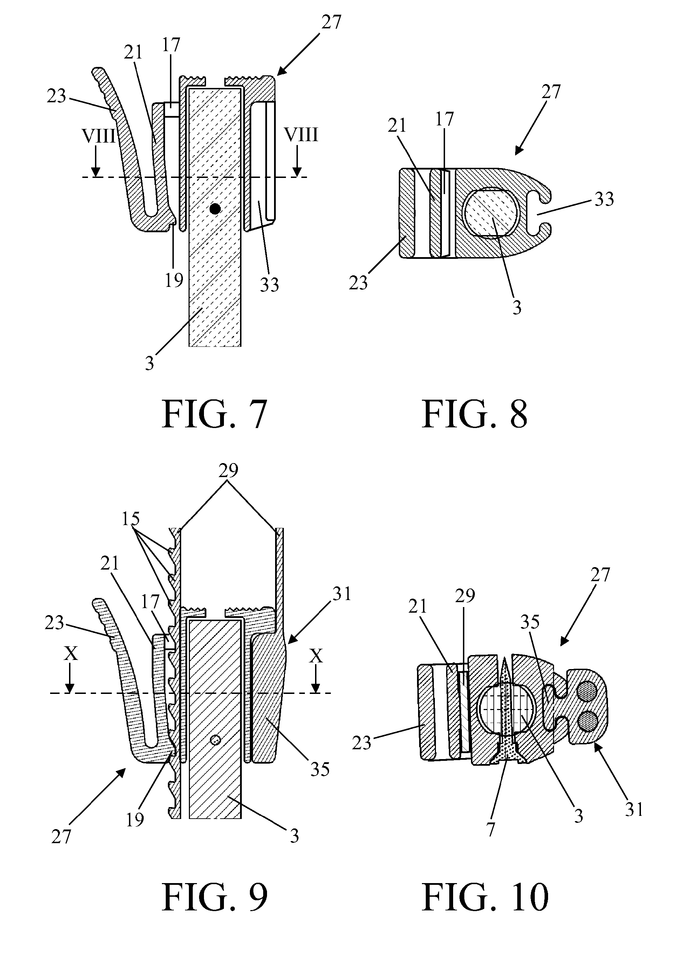

The above will be clarified with reference to the Figs. 7 and 8 and 9 and 10 respectively in which the fastening element 27 or the fastening element with the flexible strip 29 coupled thereto respectively is represented in longitudinal section and cross section respectively.

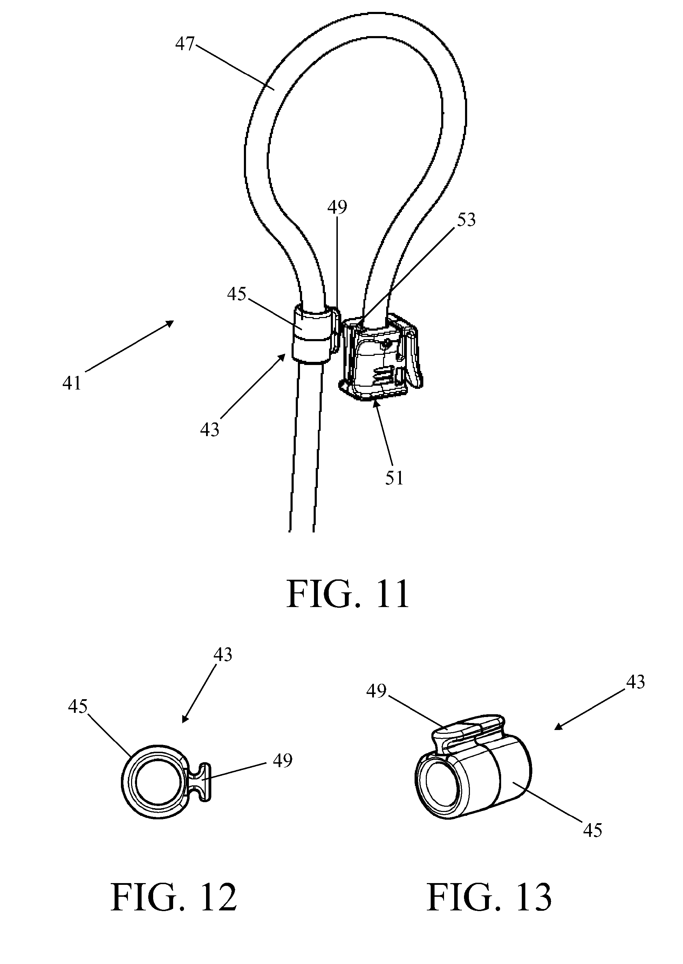

Fig. 11 shows a third embodiment of the tightening cord in a perspective view. This tightening cord 41 is provided with a coupling element 43 which is formed by a sleeve 45 which is slid around the cord 47 and is clamped thereto, and a further protrusion 49 attached thereto. This further protrusion 49 also has an in essence omega-shaped cross section and can be slid into the groove 53 present in the fastening element 51. As a result, in the case where the strip turns out to be too short, the end of the cord can be turned around a profile and then be attached to the coupling element. The further protrusion 49 then preferably extends in parallel with the cord 47.

Figs. 12 and 13 show the coupling element 43 in side view and front view respectively for illustrative purposes.

Albeit the invention has been described in the foregoing with reference to the drawings, it should be observed that the invention is not by any manner or means restricted to the embodiment shown in the drawings. The invention also extends to all embodiments deviating from the embodiment shown in the drawings within the spirit and scope defined by the claims.

## Claims

1. A tightening cord comprising connecting means for connection to an object, which tightening cord comprises a cord as well as a fastening element attached to the cord, which connecting means comprise a flexible strip having at a first end coupling means for cooperation with further coupling means located on the fastening element, and the flexible strip being connected with the other, second end to the fastening element, **characterised in that** the coupling means comprise a plurality of sawtooth-shaped protrusions extending in longitudinal direction of the strip and provided in line on the strip, and the further coupling means comprise an eye attached to the fastening element through which eye the flexible strip can be inserted, as well as a locking pin which is connected to the eye and which catches on one of the protrusions of the flexible strip that has been inserted through the eye.

2. A tightening cord as claimed in claim 1, **characterised in that** the flexible strip is detachably connected with its second end to the fastening element.

3. A tightening cord as claimed in claim 2, **characterised in that** the fastening element is provided with a groove open at one end and closed at the other and having an essentially omega-shaped cross section, and the flexible strip at the second end is provided with a protrusion having an essentially omega-shaped cross section also which is slid into the groove.

4. A tightening cord as claimed in claim 1, **characterised in that** the flexible strip is detachably connected with its second end to the fastening element and forms an integral component with the fastening element.

5. A tightening cord as claimed in any one of the preceding claims, **characterised in that** the locking pin is positioned at a first end of a flexible arm which is connected to the eye with the other, second end.

6. A tightening cord as claimed in claim 5, **characterised in that** a release lip is fixed to the first end of the flexible arm, which lip runs parallel to the arm and at a distance thereto, extending to beyond the second end.

7. A tightening cord as claimed in any one of the preceding claims, **characterised in that** the tightening cord further includes a coupling element which is connected to the cord, which coupling element is provided with a further protrusion of an in essence omega-shaped cross section which protrusion can be slid into the groove present in the fastening element.

8. A tightening cord as claimed in claim 7, **characterised in that** the coupling element comprises a sleeve which is slid over the cord and is tightly fit around the cord.

9. A tightening cord as claimed in claim 7 or 8, **characterised in that** the further protrusion extends in parallel with the cord.
